# EUROPÄISCHE PATENTSCHRIFT

(11) **EP 3 495 308 B1**
(45) Veröffentlichungstag und Bekanntmachung des Hinweises auf die Patenterteilung: **22.04.2020**
(21) Anmeldenummer: 18195746.5
(22) Anmeldetag: 20.09.2018
(51) Int. Cl.: B66C 1/12, F16G 15/00

(54) **CONTAINERAUFHÄNGEVORRICHTUNG**
CONTAINER SUSPENSION DEVICE
DISPOSITIF DE SUSPENSION DE CONTENEUR

(30) Priorität: 05.12.2017 DE 102017128906
(43) Veröffentlichungstag der Anmeldung: 12.06.2019
(73) Patentinhaber: Thiele GmbH & Co. KG, 58640 Iserlohn (DE)
(72) Erfinder: Norpoth, Bernd, 45309 Essen (DE)
(74) Vertreter: Griepenstroh, Jörg

(56) Entgegenhaltungen:
- DE-A1- 3 903 138
- DE-A1-102012 106 857
- DE-A1-102016 104 711
- DE-C2- 3 022 338
- DE-U- 7 512 193
- FR-A1- 2 352 205
- GB-A- 2 232 946

## Beschreibung

Die vorliegende Erfindung betrifft eine Containeraufhängevorrichtung zum Koppeln eines Containers mit einem Absetzarm eines Containertransporters gemäß den Merkmalen im Oberbegriff von Anspruch 1.

Aus dem Stand der Technik ist es bekannt, Absetzcontainer an verschiedenen Orten einzusetzen. Hierzu sind Containertransporter, insbesondere in Form von Absetzkippern bekannt, die einen in Rede stehenden Container von einem Lagerort zu einem Einsatzort transportieren und jeweils aufnehmen bzw. absetzen.

Hierzu weisen die Transporter Absetzarme auf, die in der Regel um eine Schwenkachse bewegt werden, so dass der Container von dem Transporter abgesetzt werden kann oder aber von einem Untergrund aufgenommen werden kann.

Um den Container mit dem Absetzarm zu koppeln, werden entsprechende Anschlagmittel in Form von Ketten verwendet. Die Container verfügen in der Regel über seitlich abstehende Zapfen, in die die Ketten z.B. mittels Containerösen eingehängt werden, so dass der Container angehoben werden kann.

Je nach Konfiguration des Containers selber sowie der Größe des Containers, jedoch unter Umständen auch abhängig vom Untergrund, von welchem der Container aufgenommen oder auf dem der Container abgesetzt werden soll, kann es notwendig sein, dass die Länge der Ketten verändert werden muss. Damit dies schnell und effizient vorgenommen werden kann, sind Kettenverkürzungselemente bekannt, mit denen am Einsatzort durch einen anwendenden Monteur die geforderte Länge des Kettenstranges eingestellt werden kann.

Eine gattungsgemäße Containeraufhängevorrichtung ist beispielsweise aus der DE 10 2012 106 857 A1 bekannt. Weiterhin ist aus der DE 390 31 38 A1 eine in Rede stehende Kettenvorrichtung bekannt.

Eine Kette erstreckt sich dabei mit zwei Kettensträngen von der Kettenverkürzungseinrichtung bis zum jeweiligen Anschlagpunkt, mithin bis zum Container. Die nicht benötigte Länge der Kette ist in der Mitte freihängend zwischen den zwei Kettensträngen ausgebildet. Die gewünschte Länge der Kette wird durch Arretieren der Kette in einem Verkürzungsbügel bzw. direkt in dem Verkürzungselement eingestellt und lagefixiert.

Während der Absetz- bzw. Aufnahmebewegung kommt es zu einer Belastung und somit auch zu einem Verschleiß an einem in Rede stehenden Kettenverkürzungselement.

Ferner ist aus der DE 10 2016 104 711 A1 eine Containeraufhängevorrichtung bekannt, welche eine Traverse aufweist sowie an den Traversen schwenkbare Aufnahmen angeordnet sind und ein jeweiliges Kettenglied des Kettenstranges in der Aufnahme formschlüssig lagefixiert wird.

Ferner ist aus der FR 2 352 205 A1 eine Vorrichtung mit einer Traverse mit zwei Traversenblechen bekannt.

Aufgabe der vorliegenden Erfindung ist es, ausgehend vom Stand der Technik eine Containeraufhängevorrichtung bereitzustellen, bei der ein jeweiliger Kettenstrang in seiner Länge einstellbar ist und die Containeraufhängevorrichtung einfach und kostengünstig hergestellt werden kann.

Die zuvor genannte Aufgabe wird erfindungsgemäß mit einer Containeraufhängevorrichtung zum Koppeln eines Containers mit einem Absetzarm eines Containertransporters mit den Merkmalen im Anspruch 1 gelöst.

Vorteilhafte Ausgestaltungsvarianten der vorliegenden Erfindung sind in den abhängigen Ansprüchen beschrieben.

Die erfindungsgemäße Containeraufhängevorrichtung eignet sich zum Koppeln eines Containers mit einem Absetzarm eines Containertransporters. Hierbei ist die Containeraufhängevorrichtung insbesondere an den Absetzarm gekoppelt. Von der Containeraufhängevorrichtung erstrecken sich dann zwei Kettenstränge in einem Winkel zueinander. In Abhängigkeit der geforderten Länge des Kettenstranges ist dann ein Kettenglied in einer Aufnahme der Containeraufhängevorrichtung lagefixiert angeordnet. Die jeweilige Aufnahme ist relativ schwenkbar zu einer Traverse der Containeraufhängevorrichtung gelagert.

Erfindungsgemäß zeichnet sich die Containeraufhängevorrichtung dadurch aus, dass die Traverse durch zwei parallel zueinander beabstandete Traversenbleche ausgebildet ist. Die Aufnahme selbst besteht aus einem Aufnahmebock sowie seitlich von dem Aufnahmebock abstehenden Armen, wobei die Arme in eine jeweilige Ausnehmung der Traversenbleche eingreifen und in dieser gelagert sind, insbesondere schwenkbar gelagert sind. Die Arme bieten insbesondere den nachfolgenden Vorteil. Im Gegensatz zu einem durchgängigen Bolzen müsste der Kettenstrang um den Bolzen herum geführt werden. Dies bedeutet, entweder taucht der Kettenstrang in Kettenlängsrichtung vor dem Bolzen ab oder wird über den Bolzen geführt. Dadurch, dass die Arme seitlich abstehen, kann jedoch erfindungsgemäß der Kettenstrang zwischen den Armen hindurch geführt werden. Der Kettenstrang verläuft somit durch die von den Armen gebildete Schwenkachse. Insbesondere kann somit die Bauform der Traverse mit Aufnahme in Zugrichtung deutlich verkürzt werden.

Die Containeraufhängevorrichtung ist somit besonders bevorzugt als Schweißbauteil hergestellt. Zwischen den Traversenblechen ist mindestens ein Koppelsteg, bevorzugt sind zwei Koppelstege, angeordnet, die die Traversenbleche miteinander verbinden. Die Traversenbleche sind mit den Koppelstegen verschweißt, wenn die Traversenbleche zusammengesetzt werden. Beim Zusammenbau der erfindungsgemäßen Containeraufhängevorrichtung werden somit die Aufnahmen zwischen den Traversenblechen angeordnet, dergestalt, dass die Arme der Aufnahmen in die Ausnehmungen der Traversenbleche eingreifen. Sodann werden die Traversenbleche mit den Koppelstegen verschweißt, wodurch die Containeraufhängevorrichtung montiert ist. Die Koppelstege können ferner einen Bolzen aufweisen, der die Koppelstege durchgreift und mit dem dann die Containeraufhängevorrichtung an einem Absetzarm gekoppelt werden kann. In Einbaulage stehen somit die Koppelstege nach oben über die Traversenbleche über.

Die Ausnehmungen in den Traversenblechen sind insbesondere halbmondförmig ausgebildet. Insbesondere erstrecken sich die Spitzen der halbmondförmigen Ausnehmung über einen Winkelbereich größer 180°, bevorzugt jedoch kleiner 270°. Die Arme sind in ihrem Querschnitt besonders bevorzugt halbkreisförmig konfiguriert. Der Radius des Halbkreises sowie der Radius des Halbmondes sind bevorzugt annähernd gleich. Somit können die Arme und respektive damit die Aufnahmen in den Ausnehmungen verschwenkt werden. Dadurch, dass sich die halbmondförmige Konfiguration über einen Winkelbereich größer 180°, jedoch kleiner 270° erstreckt, ist ein jeweiliger Endanschlag vorgegeben. Dies bietet den Vorteil, dass beim Absetzen und/oder Einstellen der jeweiligen Länge des Kettenstranges auf einen Container die Aufnahme verschwenkt wird, die Kette jedoch in Zugrichtung gradlinig ausgebildet ist. Einem vorzeitigen Verschleiß innerhalb der Rundungen der Kette selbst wird dadurch entgegengewirkt.

Damit nunmehr ein jeweiliges Kettenglied in der Aufnahme und hier in den Aufnahmebock aufgenommen wird, weist dieser besonders bevorzugt einen Schlitz auf, in welchem ein stehendes Kettenglied zumindest teilweise eingesetzt ist. In Zugrichtung hinter dem Schlitz ist ferner eine Tasche ausgebildet. Die Tasche dient zur Aufnahme eines liegenden Kettengliedes. Ist das liegende Kettenglied in die Tasche eingeführt, kommt die Außenmantelfläche des Kettenbuges zumindest teilweise in der Tasche zur Anlage. Hierdurch wird die Länge des Kettenstranges bis zu einem Containerzapfen festgelegt. Am Ende eines jeden Kettenstranges ist eine Containeröse vorgesehen, die dann an den Containerzapfen angeschlagen wird. Der Container kann somit durch die Containeraufhängevorrichtung angehoben werden.

Dadurch, dass zwischen den zwei parallel angeordneten Traversenblechen ein Abstand ausgebildet ist, sowie weiterhin die beiden Aufnahmen ebenfalls in einem Abstand zueinander angeordnet sind, kann der nicht benötigte Teil des jeweiligen Kettenstranges in der Mitte die Containeraufhängevorrichtung durchgreifend nach unten hängen. Beide Kettenstränge können auch miteinander verbunden sein.

Damit nunmehr die in den jeweiligen Aufnahmen angeordneten Kettenglieder nicht unbeabsichtigt herausspringen oder sich in sonstiger Weise lösen können, ist weiterhin das stehende und/oder das liegende Kettenglied in der Aufnahme von einem Sicherungselement übergriffen. Besonders bevorzugt ist hierzu das Sicherungselement an einem schwenkbaren und axial verschieblichen Bolzen gelagert. Der Bolzen ist seitlich des stehenden Kettengliedes angeordnet. Alternativ kann auch ein Bolzen im Bereich des liegenden Kettengliedes gelagert sein. Der Bolzen durchgreift dann bevorzugt das liegende Kettenglied. Ist nunmehr ein jeweiliges Kettenglied in der Aufnahme angeordnet, kann der Bolzen axial verschoben, insbesondere angehoben, werden, das Sicherungselement in Sicherungsstellung geschwenkt werden und dann der Bolzen wiederum abgesenkt werden. Besonders bevorzugt erfolgt eine weitere Arretierung des Bolzens.

Die vorliegende Erfindung betrifft somit auch eine Anordnung einer Containeraufhängevorrichtung mit dem jeweiligen Kettenstrang. Die Erfindung betrifft weiterhin ein Verfahren zum Einstellen der benötigten Kettenlänge an einer Containeraufhängevorrichtung.

Weiterhin besonders bevorzugt kann für das liegende Kettenglied ein Flachkettenglied verwendet werden. Dies bedeutet, dass die Schenkel des liegenden Kettengliedes eine geringere Höhe aufweisen als die Schenkel eines stehenden Kettengliedes. Bezogen auf die Fahrzeugbreite des Containertransporters ist es somit möglich, eine geringere Breite der Containeraufhängevorrichtung zu realisieren. Dies bedingt wiederum eine geringere Breite des Containertransporters und/oder eine größere Breite des Containers.

Bevorzugt weist die jeweilige Kette des Kettenstranges ein Verhältnis der Teilung t zum Durchmesser d eines Kettengliedes größer gleich (≥) 1:3 und kleiner gleich (≤) 1:5 auf. Dies bedeutet t größer gleich (≥) 3mal d und t kleiner gleich (≤) 5mal d. Der Vorteil ist eine Gewichtsersparnis der Kette und damit ein leichteres Handling des Kettenstranges beim Verkürzen oder Verlängern.

Weitere Vorteile, Eigenschaften, Aspekte der vorliegenden Erfindung sind Gegenstand der nachfolgenden Beschreibung. Bevorzugte Ausgestaltungsvarianten sind in den schematischen Figuren dargestellt. Diese dienen dem einfachen Verständnis der Erfindung. Es zeigen:
- Figur 1: eine erfindungsgemäße Containeraufhängevorrichtung in Seitenansicht,
- Figur 2: eine Schnittansicht gemäß Figur 1,
- Figur 3: die Containeraufhängevorrichtung in einer perspektivischen Ansicht von oben,
- Figur 4: die Containeraufhängevorrichtung in einer perspektivischen Ansicht von unten,
- Figur 5 a und b: eine perspektivische Ansicht auf die Containeraufhängevorrichtung ohne Kettenstränge und eine Detailansicht der Ausnehmung,
- Figur 6: ein Aufnahmebock ohne eingehängtes Kettenglied,
- Figur 7: der Aufnahmebock mit eingehängtem Kettenglied und Sicherung,
- Figur 8: der Aufnahmebock mit eingehängtem Kettenglied und Sicherung,
- Figur 9 und 11: ein jeweiliger Schnitt durch die Aufnahme mit eingesetztem Kettenstrang und Ansicht von oben,
- Figur 10 und 12: ein jeweiliger Schnitt durch die Aufnahme mit eingesetztem Kettenstrang und Ansicht von oben,
- Figur 13: eine alternative Ausgestaltungsvariante der Aufnahme mit einem Flachkettenglied,
- Figur 14: eine alternative Ausgestaltungsvariante der Aufnahme mit einem Flachkettenglied,
- Figur 15: eine alternative Ausgestaltungsvariante der Aufnahme mit einem Flachkettenglied.

In den Figuren werden für gleiche oder ähnliche Bauteile dieselben Bezugszeichen verwendet, auch wenn eine wiederholte Beschreibung aus Vereinfachungsgründen entfällt.

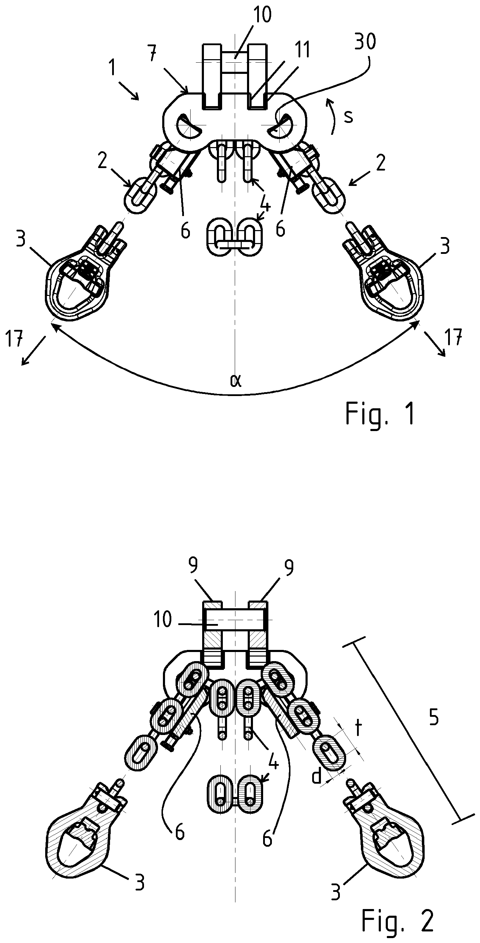

Figur 1 zeigt eine erfindungsgemäße Containeraufhängevorrichtung 1 in einer Seitenansicht. Von der Containeraufhängevorrichtung 1 erstrecken sich zwei Kettenstränge 2 in einem Winkel α zueinander. Am Ende eines jeden Kettenstranges 2 ist eine Containeröse 3 zum Anschlagen an einen nicht näher dargestellten Container angeordnet.

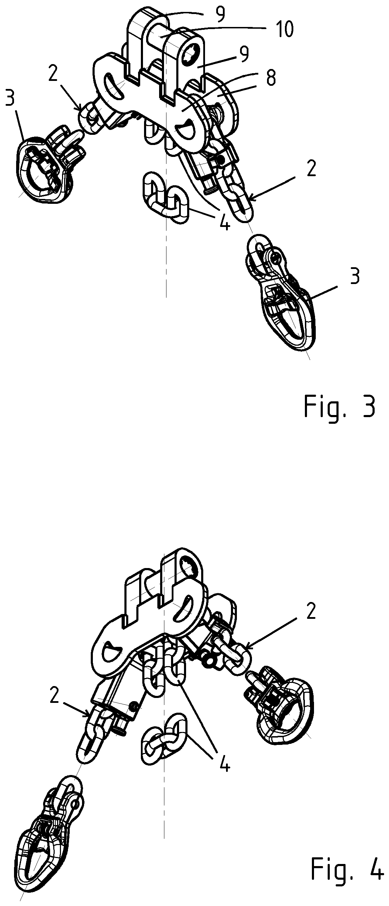

Eine Schnittansicht der Containeraufhängevorrichtung 1 ist in Figur 2 gezeigt. Figur 3 und 4 zeigen eine jeweilige Perspektivansicht auf die Containeraufhängevorrichtung 1 mit dem jeweiligen Kettenstrang 2. Ein nicht benötigter Teil 4 des Kettenstranges 2 kann die Containeraufhängevorrichtung 1 durchgreifend herunterhängen, so dass eine jeweilige Länge 5 eines Kettenstranges 2 eingestellt werden kann. Hierzu wird jeweils mindestens ein Kettenglied in eine relativ zu der Traverse 7 schwenkbare Aufnahme 6 eingelegt und formschlüssig lagefixiert, so dass dadurch die Länge 5 des Kettenstranges 2 von der Containeraufhängevorrichtung 1 bis zur Containeröse 3 festgelegt ist. Ein jeweiliger dazwischen liegender Teil 4 eines Kettenstranges 2 ist aus Vereinfachungsgründen nicht dargestellt.

Die Containeraufhängevorrichtung 1 selbst weist eine Traverse 7 auf, wobei die Traverse 7 selbst wiederum aus zwei parallel zueinander beabstandeten Traversenblechen 8 ausgebildet ist. Die Traversenbleche 8 können durch Laserschneiden hergestellt sein. Die Traversenbleche 8 werden über zwei Koppelstege 9 miteinander verbunden. Die Koppelstege 9 erstrecken sich selbst quer zu den Traversenblechen 8 und stehen in Einbausituation über die Traverse 7 über. Die Koppelstege 9 durchgreifend ist ein Bolzen 10 angeordnet, wobei der Bolzen 10 mit einem nicht näher dargestellten Absetzarm eines Containertransporters gekoppelt werden kann. Die Koppelstege 9 selbst sind über Schweißnähte 11 mit den Traversenblechen 8 gekoppelt.

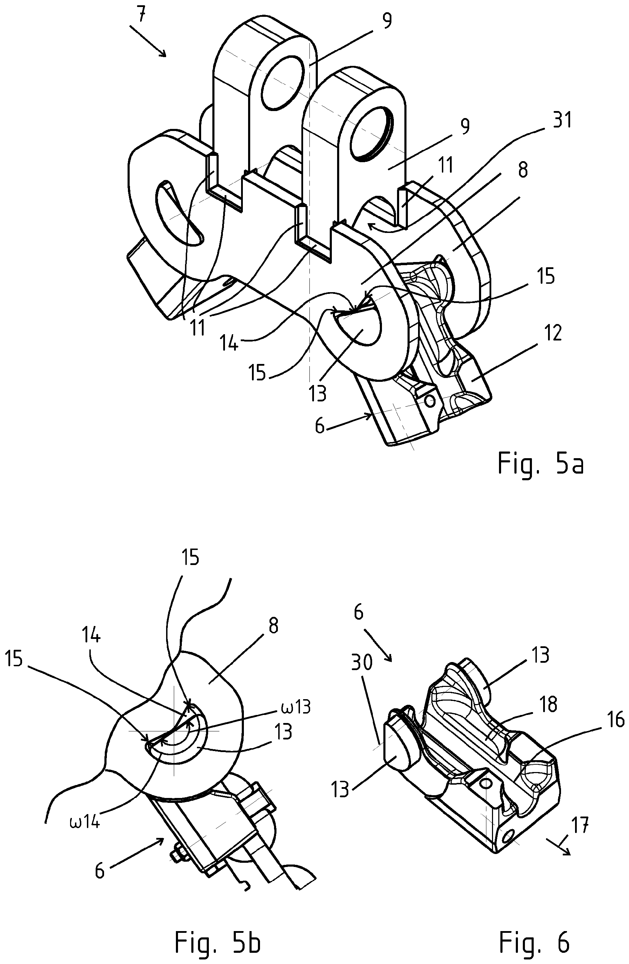

Eine vergrößerte Darstellung der Containeraufhängevorrichtung ist nochmals in Figur 5a und b gezeigt. Eine jeweilige Aufnahme 6 ist aus einem Aufnahmebock 12 ausgebildet, wobei von dem Aufnahmebock 12 seitlich abstehende Arme 13 angeordnet sind. Insbesondere ist der Aufnahmebock 12 einstückig und werkstoffeinheitlich hergestellt, besonders bevorzugt aus einem Stahlwerkstoff, insbesondere als Schmiedebauteil. Die Traversenbleche 8 und die Koppelstege 9 sind ebenfalls aus Stahlwerkstoff hergestellt. Die Arme 13 einer jeweiligen Aufnahme 6 greifen dabei in eine Ausnehmung 14 in den Traversenblechen 8 ein. Die Arme 13 sind bevorzugt halbkreisförmig konfiguriert. Die Ausnehmungen 14 sind besonders bevorzugt halbmondförmig konfiguriert. Eine Ausnehmung 14 erstreckt sich dabei über einen Winkelbereich ω14 größer 180°, jedoch bevorzugt kleiner 270°. Hierdurch ergibt sich ein jeweiliger Anschlag 15, so dass die Schwenkbewegung der Aufnahme 6 zu der Traverse 7 begrenzt wird. Die Arme 13 erstrecken sich über einen Winkelbereich ω13, welcher bevorzugt kleiner gleich 180° ist.

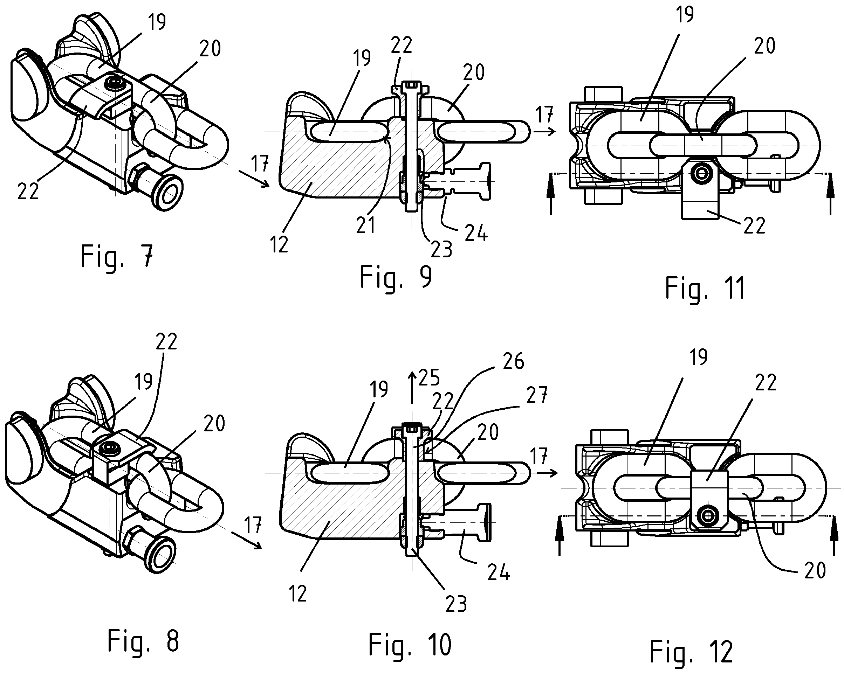

Figur 6 zeigt eine perspektivische Ansicht der Aufnahme 6. Diese weist einen Schlitz 16 auf sowie eine in Zugrichtung 17 hinter dem Schlitz 16 gelagerte Tasche 18. Gemäß der Darstellung von Figuren 7, 8, 9, 10, 11 und 12 ist in der Tasche 18 ein jeweiliges liegendes Kettenglied 19 angeordnet und in dem Schlitz 16 zumindest teilweise aufgenommen ein stehendes Kettenglied 20. Das liegende Kettenglied 19 kommt mit einem vorderen Bug 21 zumindest teilweise in der Tasche 18 formschlüssig zur Anlage, so dass hier ein Widerlager in Zugrichtung 17 gegeben ist.

Ferner ist die Schwenkachse 30 eingezeichnet, welche die Aufnahme 6 relativ zu der Traverse 7 in einer Schwenkbewegung S verschwenkt werden kann, so wie in Figur 1 dargestellt. Die in Figur 6 nicht näher dargestellten Kettenglieder des Kettenstranges 2 werden zwischen den beiden seitlich abstehenden Armen 13 hindurch geführt. Insbesondere liegen die Kettenglieder in der Schwenkachse 30. Somit kann insbesondere die Aufnahme 6 näher an die Koppelstege 9 verlagert werden, so dass sich eine kompaktere Bauform der Traverse 7 ergibt. Ebenfalls weisen die Koppelstege 9 an ihrer Unterseite noch Ausnehmungen 31 auf, so dass der Kettenstrang 2 hier hindurchgeführt werden kann. Auch hierdurch ergibt sich eine kompaktere Bauform der Traverse 7.

Das stehende Kettenglied 20 ist zumindest teilweise von einem Sicherungselement 22 übergriffen. Dies ist in Figur 8 und 12 dargestellt. In Figur 7 und 11 ist das Sicherungselement 22 in Öffnungsstellung gezeigt. In Figur 9 ist ebenfalls die Öffnungsstellung gezeigt und in Figur 10 die Schließstellung. In der Schließstellung übergreift das Sicherungselement 22 das stehende Kettenglied 20 zumindest teilweise. In der Öffnungsstellung ist das Sicherungselement 22 von dem stehenden Kettenglied 20 weggeschwenkt, so dass der Kettenstrang 2 aus der Aufnahme 6 herausgenommen werden kann und in seiner Länge 5 beliebig festgelegt werden kann, indem ein weiteres, liegendes Kettenglied 19 in die Tasche 18 eingelegt wird.

Hierzu ist das Sicherungselement 22 an einem axial verschieblichen Bolzen 23 gelagert, wobei der Bolzen 23 über einen weiteren Sicherungspin 24 gemäß Figur 10 arretiert ist. Wird nunmehr der Sicherungspin 24 auf die Bildebene nach rechts herausgezogen, so kann der Bolzen 23 in Axialrichtung 25 angehoben und um seine Mittellängsachse 26 rotiert werden. Das Sicherungselement 22 weist selber einen exzentrischen Versatz 27 auf, so dass es gemäß Figur 10 in einer Sicherungsstellung 22 vertieft ist und auf dem stehenden Kettenglied 20 aufliegt. Gemäß der Öffnungsstellung von Figur 9 ist der exzentrische Versatz 27 auf die Bildebene bezogen nach links geschwenkt, so dass gleichsam das Sicherungselement 22 in Axialrichtung 25 des Bolzens 23 höher gelagert ist, wobei das Sicherungselement 22 ebenfalls aus dem Bereich des stehenden Kettengliedes 20 herausgeschwenkt ist.

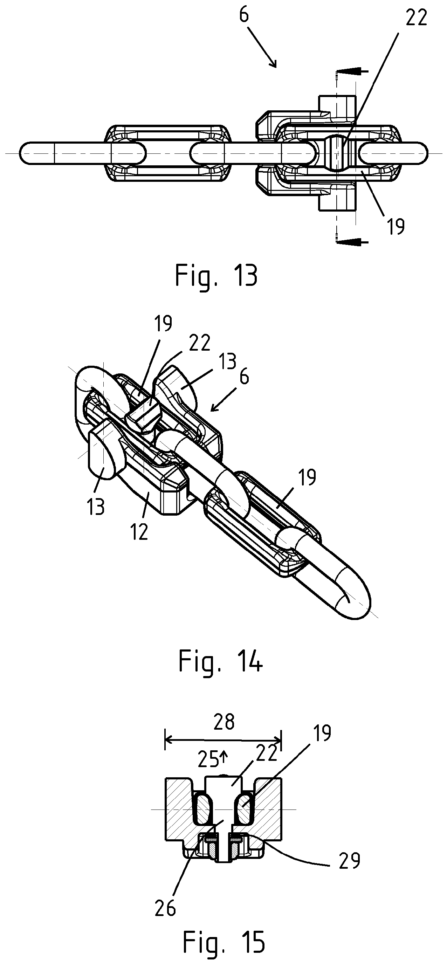

Figuren 13, 14 und 15 zeigen eine alternative Ausgestaltungsvariante, insbesondere der Aufnahme 6 selbst. Hier ist auch ein Aufnahmebock 12 mit seitlich abstehenden Armen 13 ausgebildet. Der Aufnahmebock 12 kann jedoch in seiner Breite 28 schmaler ausgebildet werden, da das jeweils liegende Kettenglied 19 als Flachkettenglied ausgebildet ist. Dies bedeutet, dass die jeweiligen Schenkel des Flachkettengliedes eine geringere Höhe aufweisen, so dass insgesamt die Breite 28 der gesamten Anordnung verringert werden kann. In diesem Fall ist ein Sicherungselement 22 ausgebildet, wobei das Sicherungselement 22 das liegende Kettenglied 19 durchgreift. Dies ist insbesondere in Figur 15 zu erkennen. Das Sicherungselement 22 kann beispielsweise über eine Feder 29 gelagert sein und um seine Mittellängsachse 26 um 90° gedreht werden, so dass in Axialrichtung 25 das liegende Kettenglied 19 aus der Tasche 18 herausgehoben werden kann.

Durch eine aufgebrachte Reibkraft verbleibt das Sicherungselement 22 in der jeweiligen Stellung. Die Flachkettenglieder können durch Gießen oder Schmieden hergestellt sein. Die dazwischen angeordneten Kettenglieder sind dann bevorzugt als Rundstahlkettenglieder hergestellt, die verschweißt werden.

### Bezugszeichen:

- 1 -: Containeraufhängevorrichtung
- 2 -: Kettenstrang
- 3 -: Containeröse
- 4 -: Teil zu 2
- 5 -: Länge zu 2
- 6 -: Aufnahme
- 7 -: Traverse
- 8 -: Traversenblech
- 9 -: Koppelsteg
- 10 -: Bolzen
- 11 -: Schweißnaht
- 12 -: Aufnahmebock
- 13 -: Arm
- 14 -: Ausnehmung
- 15 -: Anschlag
- 16 -: Schlitz
- 17 -: Zugrichtung
- 18 -: Tasche
- 19 -: Liegendes Kettenglied
- 20 -: Stehendes Kettenglied
- 21 -: Bug zu 19
- 22 -: Sicherungselement
- 23 -: Bolzen
- 24 -: Sicherungspin
- 25 -: Axialrichtung
- 26 -: Mittellängsachse
- 27 -: Exzentrischer Versatz
- 28 -: Breite
- 29 -: Feder
- 30 -: Schwenkachse zu 13
- 31 -: Ausnehmungen
- α -: Winkel
- ω13 -: Winkelbereich
- ω14 -: Winkelbereich

## Patentansprüche

1. Containeraufhängevorrichtung (1) zum Koppeln eines Containers mit einem Absetzarm eines Containertransporters, wobei von der Containeraufhängevorrichtung (1) aus zwei Kettenstränge (2) in einem Winkel (a) zueinander verlaufen und jeweils ein Kettenglied in einer Aufnahme (6) der Containeraufhängevorrichtung (1) lagefixierbar ist, wobei die Aufnahme (6) relativ schwenkbar zu einer Traverse (7) gelagert ist, **dadurch gekennzeichnet, dass** die Traverse (7) durch zwei Traversenbleche (8) ausgebildet ist, die parallel zueinander beabstandet angeordnet sind und die mindestens eine Aufnahme (6) aus einem Aufnahmebock (12) sowie von dem Aufnahmebock (12) seitlich abstehenden Armen (13) ausgebildet ist, wobei die Arme (13) in einer jeweiligen Ausnehmung (14) der Traversenbleche (8) gelagert sind.

2. Containeraufhängevorrichtung nach Anspruch 1, **dadurch gekennzeichnet, dass** die Traverse (7) durch zwei Traversenbleche (8) mit zwei Koppelstegen (9) als Schweißbauteil hergestellt ist.

3. Containeraufhängevorrichtung nach Anspruch 2, **dadurch gekennzeichnet, dass** mindestens ein Koppelsteg (9), bevorzugt zwei Koppelstege (9) die Traversenbleche (8) miteinander verbinden, wobei der Koppelsteg/die Koppelstege (9) in Einbaulage nach oben über die Traversenbleche (8) überstehen.

4. Containeraufhängevorrichtung nach den Ansprüchen 1 bis 3, **dadurch gekennzeichnet, dass** die Ausnehmungen (14) in den Traversenblechen (8) halbmondförmig ausgebildet sind und/oder dass die Arme (13) halbkreisförmig ausgebildet sind.

5. Containeraufhängevorrichtung nach Anspruch 4, **dadurch gekennzeichnet, dass** die Ausnehmungen (14) sich über einen Winkelbereich erstrecken, der größer ist als der Winkelbereich, über den sich die halbkreisförmig ausgebildeten Arme (13) erstrecken.

6. Containeraufhängevorrichtung nach den Ansprüchen 1 bis 5, **dadurch gekennzeichnet, dass** die Aufnahme (6) einen Schlitz (16) aufweist, in welchen zumindest teilweise ein stehendes Kettenglied (20) eingesetzt ist und in Zugrichtung (17) hinter dem Schlitz (16) eine Tasche (18) zur Aufnahme (6) eines liegenden Kettengliedes (19) ausgebildet ist, wobei die Außenmantelfläche des Kettenbuges (21) zumindest teilweise in der Tasche (18) zur Anlage kommt.

7. Containeraufhängevorrichtung nach Anspruch 6, **dadurch gekennzeichnet, dass** das stehende Kettenglied (20) von einem Sicherungselement (22) übergriffen ist.

8. Containeraufhängevorrichtung nach Anspruch 7, **dadurch gekennzeichnet, dass** das Sicherungselement (22) an einem schwenkbaren und axial verschieblichen Bolzen (23) gelagert ist, welcher seitlich des stehenden Kettengliedes (20) angeordnet ist oder dass der Bolzen (23) im Bereich des liegenden Kettengliedes (19) gelagert ist, wobei bevorzugt das liegende Kettenglied (19) von dem Sicherungselement (22) durchgriffen ist.

9. Containeraufhängevorrichtung nach den Ansprüchen 6 bis 8, **dadurch gekennzeichnet, dass** für die liegenden Kettenglieder (19) ein Flachkettenglied verwendet ist.

10. Containeraufhängevorrichtung nach den Ansprüchen 1 bis 9, **dadurch gekennzeichnet, dass** der Kettenstrang (2) durch eine Schwenkachse (30) der Arme (13) verläuft und/oder der Kettenstrang (2) zwischen den Armen (13) hindurchgeführt wird.

## Claims

1. Container suspension device (1) for coupling a container with a set-down arm of a container transporter, wherein from the container suspension device (1) extend two chain strands (2) at an angle (α) to one another and respectively one chain link can be fixed in position in a receptacle (6) of the container suspension device (1), wherein the receptacle (6) is supported in a relatively pivotable manner to a crossbeam (7), **characterised in that** the crossbeam (7) is formed by two traverse sheets (8) which are disposed spaced parallel to one another and the at least one receptacle (6) is formed by a receiving frame (12) as well as by arms (13) protruding laterally from the receiving frame (12), wherein the arms (13) are supported in a respective recess (14) of the traverse sheets (8).

2. Container suspension device according to claim 1, **characterised in that** the crossbeam (7) is produced by means of two traverse sheets (8) with two coupling webs (9) as a welded part.

3. Container suspension device according to claim 2, **characterised in that** at least one coupling web (9), preferably two coupling webs (9) connect the traverse sheets (8) with one another, wherein the coupling web(s) (9) in installed state protrude(s) upwards over the traverse sheets (8).

4. Container suspension device according to claims 1 to 3, **characterised in that** the recesses (14) in the traverse sheets (8) are formed half-moon-shaped and/or that the arms (13) are formed semicircular in shape.

5. Container suspension device according to claim 4, **characterised in that** the recesses (14) extend across an angle range which is greater than the angle range across which the semicircular-shaped arms (13) extend.

6. Container suspension device according to claims 1 to 5, **characterised in that** the receptacle (6) has a slot (16) into which a standing chain link (20) is at least partially inserted and in tensile direction (17) behind the slot (16) is formed a pocket (18) for the reception (6) of a lying chain link (19), wherein the outer surface of the chain nose (21) comes at least partially to abutment in the pocket (18).

7. Container suspension device according to claim 6, **characterised in that** the standing chain link (20) is gripped from above by a safety element (22).

8. Container suspension device according to claim 7, **characterised in that** the safety element (22) is supported on a pivotable and axially-displaceable bolt (23), which is disposed laterally to the standing chain link (20) or that the bolt (23) is supported in the region of the lying chain link (19), wherein preferably the lying chain link (19) is gripped through by the safety element (22).

9. Container suspension device according to claims 6 to 8, **characterised in that** for the lying chain links (19) a flat chain link is used.

10. Container suspension device according to claims 1 to 9, **characterised in that** the chain strand (2) extends through a pivot axis (30) of the arms (13) and/or the chain strand (2) is guided between the arms (13).

## Revendications

1. Dispositif de suspension de conteneur (1) pour coupler un conteneur avec un bras de dépose d'un transporteur de conteneur, dans lequel deux chaînes (2) s'étendent en convergeant avec un angle (α) à partir du dispositif de suspension de conteneur (1) et, à chaque fois, un maillon de chaîne peut être fixé en position dans un logement (6) du dispositif de suspension de conteneur (1) et dans lequel le logement (6) est logé de manière à pouvoir pivoter par rapport à une traverse (7), **caractérisé en ce que** la traverse (7) est réalisée par deux tôles de traverse (8) qui sont agencées parallèlement et à distance l'une de l'autre et l'au moins un logement (6) est réalisé à partir d'un support de logement (12) ainsi que de bras (13) s'éloignant latéralement du support de logement (12), lesquels bras (13) sont logés dans un évidement (14) respectif des tôles de traverse (8).

2. Dispositif de suspension de conteneur selon la revendication 1, **caractérisé en ce que** la traverse (7) est fabriquée par deux tôles de traverse (8) avec des barres de couplage (9) comme pièce soudée.

3. Dispositif de suspension de conteneur selon la revendication 2, **caractérisé en ce qu'**au moins une barre de couplage (9), de préférence deux barres de couplage (9), relient ensemble les tôles de traverse (8), laquelle barre de couplage / lesquelles barres de couplage (9) dépassent des tôles de traverse (8) vers le haut en position de montage.

4. Dispositif de suspension de conteneur selon les revendications 1 à 3, **caractérisé en ce que** les évidements (14) dans les tôles de traverse (8) sont réalisés en forme de demi-lunes et/ou **en ce que** les bras (13) sont réalisés en forme de demi-cercles.

5. Dispositif de suspension de conteneur selon la revendication 4, **caractérisé en ce que** les évidements (14) s'étendent sur une plage angulaire qui est plus grande que la plage angulaire sur laquelle les bras (13) réalisés en forme de demi-cercles s'étendent.

6. Dispositif de suspension de conteneur selon les revendications 1 à 5, **caractérisé en ce que** le logement (6) comporte une fente (16) dans laquelle est placé au moins partiellement un maillon de chaîne dressé (20) et une poche (18) pour le logement (6) d'un maillon de chaîne couché (19) est réalisée derrière la fente (16) dans la direction de traction (17), la surface enveloppante extérieure du nez avant (21) venant alors au moins partiellement en appui dans la poche (18).

7. Dispositif de suspension de conteneur selon la revendication 6, **caractérisé en ce que** le maillon de chaîne dressé (20) est recouvert par un élément de sûreté (22).

8. Dispositif de suspension de conteneur selon la revendication 7, **caractérisé en ce que** l'élément de sûreté (22) est monté sur un axe (23) pivotant et mobile axialement qui est agencé sur le côté du maillon de chaîne dressé (20) ou **en ce que** l'axe (23) est monté dans la zone du maillon de chaîne couché (19), lequel maillon de chaîne couché (19) est de préférence traversé par l'élément de sûreté (22).

9. Dispositif de suspension de conteneur selon les revendications 6 à 8, **caractérisé en ce qu'**un maillon de chaîne plat est utilisé pour les maillons de chaîne couchés (19).

10. Dispositif de suspension de conteneur selon les revendications 1 à 9, **caractérisé en ce que** la chaîne (2) passe à travers un axe de pivotement (30) des bras (13) et/ou la chaîne (2) est guidée entre les bras (13).
